# EUROPÄISCHE PATENTSCHRIFT

(11) **EP 0 531 753 B1**
(45) Veröffentlichungstag und Bekanntmachung des Hinweises auf die Patenterteilung: **22.02.1995**
(21) Anmeldenummer: 92114014.1
(22) Anmeldetag: 17.08.1992
(51) Int. Cl.: G01L 5/10, G01L 1/08

(54) **Fadenzugkraftsensor für eine Textilmaschine**
Yarn tension measuring sensor for a textile machine
Palpeur pour mesurer la tension d'un fil pour une machine textile

(30) Priorität: 07.09.1991 DE 4129803
(43) Veröffentlichungstag der Anmeldung: 17.03.1993
(73) Patentinhaber: W. SCHLAFHORST AG & CO., D-41061 Mönchengladbach (DE)
(72) Erfinder: Hartel, Robert, Dr.-Ing., D-52080 Aachen (DE); Höhne, Karl-Josef, W-5000 Köln 40 (DE); Hermanns, Ferdinand-Josef, W-5140 Erkelenz (DE); Henze, Herbert, W-4050 Mönchengladbach 1 (DE); Knors, Herbert, W-4050 Mönchengladbach 1 (DE); Engelhardt, Dietmar, W-4050 Mönchengladbach 1 (DE); Zitzen, Wilhelm, W-4050 Mönchengladbach 1 (DE); Veyes, Manfred, W-4050 Mönchengladbach 2 (DE); Merkens, Herbert, W-5140 Erkelenz 17 (DE); Weissenfels, Wolfram, W-4050 Mönchengladbach 1 (DE); Rütten, Hermann, W-4060 Viersen 1 (DE); Jägers, Dirk, W-4050 Mönchengladbach 2 (DE); Pommer, Berndt, W-4050 Mönchengladbach 1 (DE)
(74) Vertreter: Hamann, Arndt, Dipl.-Ing.

(56) Entgegenhaltungen:
- CH-A- 675 772
- DD-A- 152 627
- DE-A- 2 535 209
- DE-A- 3 506 698
- DE-A- 3 708 565
- DE-A- 4 030 892
- DE-B- 1 957 485

## Beschreibung

Die Erfindung betrifft einen Fadenzugkraftsensor für eine Textilmaschine nach dem Oberbegriff des ersten Anspruches.

Fadenzugkraftsensoren sind an Textilmaschinen seit langem bekannt und dienen der Feststellung von Fadenbrüchen oder auch unmittelbar der Steuerung der Fadenzugkraft mittels eines Fadenspanners mit dem Ziel der Vergleichmäßigung derselben.

Derartige Vorrichtungen sind zum Beispiel aus der DE-OS 20 60 733 oder dem SU-UHS 12 17 764 bekannt. Bei diesen bekannten Vorrichtungen wird die von der Fadenspannung abhängige Auslenkung eines Fadenführers mechanisch übertragen und in Steuersignale zur Veränderung der gegenseitigen Anpreßkraft von Spannertellern eines Fadenspanners umgewandelt. Diese Vorrichtungen besitzen eine relativ hohe Regelträgheit, die durch den Bewegungsweg des mit dem Fadenspannungsmesser verbundenen Fadenführers hervorgerufen wird. Derartige Vorrichtungen können bei hohen Fadengeschwindigkeiten in Schwingungen geraten, wodurch die Meßgenauigkeit stark eingeschränkt wird.

Durch die ältere, nicht vorveröffentlichte deutsche Patentanmeldung P 40 30 892.8 ist eine Fadenzugkraftmeßeinrichtung bekannt, deren Grundprinzip auf dem Messen der durch die Gleitreibung des Fadens an einem Fadenführer erzeugten Temperatur beruht. Dieser einen Temperatursensor aufweisende Fadenführer kann fest angeordnet sein, so daß auch bei hohen Fadengeschwindigkeiten keine Schwingungen entstehen.

Des weiteren ist aus DE-A-2535209 ein Fadenungsensor mit einem Fühlerarm au der Achse eines Stellmotors bekannt. Durch ein Ausgleichsgewicht am Fühlerarm werden Maschinenschwingungen unterdrückt, und durch das vom Motorstrom erzeugte Gegen drehmoment die Lage des Fühlerarms gehalten. Somit ist der gemessene Motorstrom ein Maß für den Fadenzug.

Die bekannten Fadenzugkraftsensoren sind nicht in der Lage, hochfrequente Fadenspannungsschwankungen zu ermitteln.

Aufgabe der Erfindung ist es deshalb, einen Fadenzugkraftsensor für eine Textilmaschine vorzuschlagen, der für die Fadenzugkraftmessung an schnellaufenden Fäden geeignet ist und mit dem auch hochfrequente Fadenzugkraftschwankungen ermittelbar sind.

Diese Aufgabe wird erfindungsgemäß durch die kennzeichnenden Merkmale des ersten Anspruches gelöst.

Der erfindungsgemäße Fadenzugkraftsensor mißt nahezu weglos und besitzt hohe dynamische Eigenschaften. Da die erfindungsgemäße Vorrichtung im hohen Maße Strom/Kraft-proportional ist, kann bei entsprechender Reglerauslegung der Tauchspulenstrom als direkte Fadenspannungsgröße entnommen werden. Damit ist die Ermittlung der Fadenspannung nicht an das Maß der Auslenkung eines Fadenführers gebunden. Die Regelträgheit läßt sich problemlos zum Beispiel auf Werte von 30 bis 50 Hz oder auch mehr in Abhängigkeit von der Dimensionierung und der Wahl der Bauteile herabsetzen. Der Aufbau ist relativ einfach und wenig störanfällig.

Die Erfindung ist durch die kennzeichnenden Merkmale der Ansprüche 2 bis 14 vorteilhaft weitergebildet.

Durch die Erfaßbarkeit relativ hochfrequenter Fadenzugkraftschwankungen ist es auch möglich, zwischen periodischen und nichtperiodischen Schwankungen sowie Schwankungen unterschiedlicher Periodizität zu unterscheiden. Damit ergibt sich für den Fadenspannungssensor eine erheblich größerer Anwendungsbreite.

Neben dem Ausgleichen nichtperiodischer Fadenspannungsschwankungen über Fadenbremsmittel, zum Beispiel Eadenspanner, besteht die Möglichkeit, bei Abweichungen der vorgegebenen Fadenzugkraftcharakteristik, die periodisch auftreten, ein Störsignal zu veranlassen. So kann zum Beispiel das Ausbleiben der durch das Fadentraversieren hervorgerufenen periodischen Fadenzugkraftschwankung bei Verwendung einer Kehrgewindewalze für die Fadenverlegung als Trommelwickel erkannt und die sofortige Stillsetzung der Spulstelle eingeleitet werden.

Mit Hilfe des erfindungsgemäßen Fadenzugkraftsensors ist es jedoch auch möglich, zum Beispiel die progressive Zunahme der Fadenzugkraft beim Aufspulen des letzten Drittels eines Kopses an der Spulstelle zu erkennen und entsprechend die Spulgeschwindigkeit zur Vermeidung von Fadenbrüchen zu drosseln.

Die die Breite der Polschuhe überschreitende Länge der Tauchspule gewährleistet selbst für den Fall, daß die Tauchspule geringfügige Längsbewegungen ausführt, ein lineares Strom-Kraftverhalten, da die von den Polschuhen ausgehenden Magnetlinien die Tauchspule immer vollständig schneiden.

Die Aufhängung der Tauchspule kann auf verschiedene Weise erfolgen, wobei lediglich darauf zu achten ist, daß die Halterung selbst die freie Beweglichkeit der Tauchspule nicht beeinflußt. Durch einen analogen HALL-Chip oder eine Lichtschranke lassen sich bereits geringfügige Lageänderungen der Tauchspule feststellen.

Die Erfindung ist nachfolgend anhand von Ausführungsbeispielen näher erläutert. In den zugehörigen Zeichnungen zeigen:
- Fig. 1: eine schematische Darstellung eines Fadenzugkraftsensors mit zugehöriger Schaltung,
- Fig. 2: eine Variante des Fadenzugkraftsensors nach Fig. 1 mit in Abhängigkeit von der Fadenzugkraft gesteuertem Fadenspanner und
- Fig. 3: eine weitere Variante des Fadenzugkraftsensors.

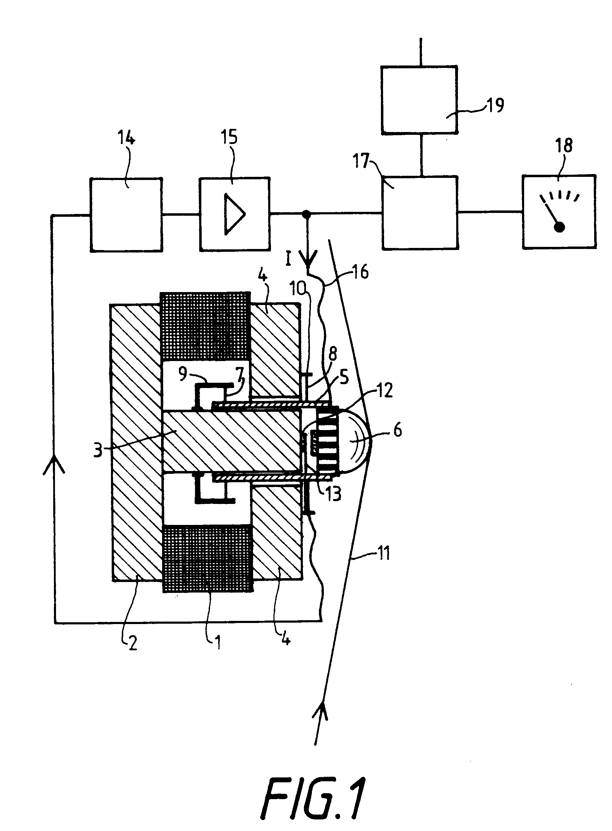

Der in Fig. 1 dargestellte Fadenzugkraftsensor besitzt einen Ringmagneten 1, an dem auf einer Seite eine Polscheibe 2 und auf der gegenüberliegenden Seite ein Polring 4 angebracht ist. In die Mittelöffnung des Polringes 4 ragt eine Tauchspule 5 unter Ausbildung eines Luftspaltes. In diese Tauchspule ragt von der anderen Seite ein Kern 3, der mittig auf der Polscheibe 2 befestigt ist. Auch gegenüber diesem Kern 3 bildet die Tauchspule 5 einen Luftspalt aus.

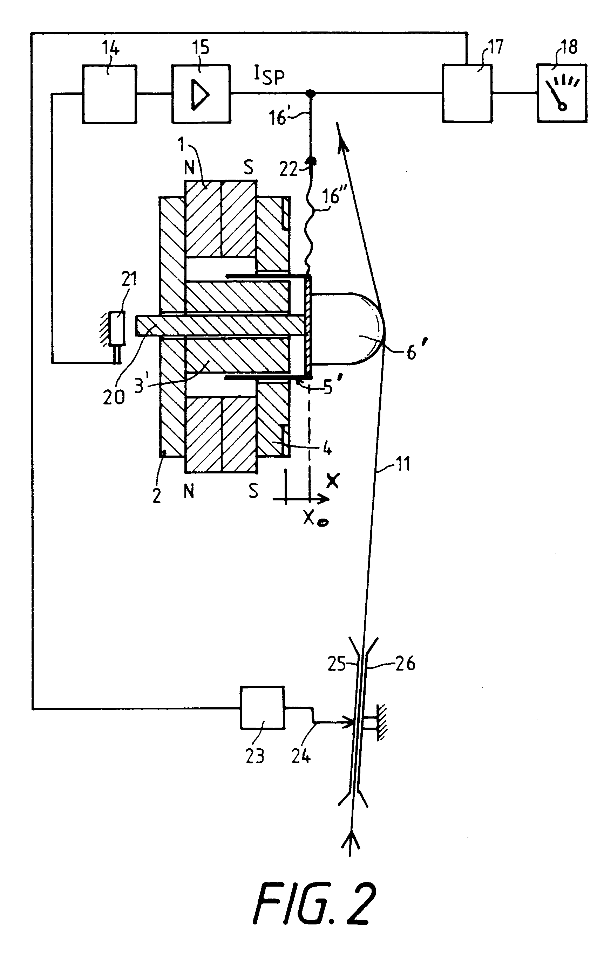

Polscheibe 2, Kern 3 und Polring 4 bestehen aus ferromagnetischem Material. Dadurch werden die Magnetlinien auf diese Bauteile konzentriert. Ohne daß das hier näher dargestellt ist, verlaufen diese ausgehend vom Ringmagneten 1 durch die Polscheibe 2, den Kern 3 über den Luftspalt, in dem die Tauchspule 5 angeordnet ist, und den Polring 4 zur gegenüberliegenden Seite des Ringmagneten 1. Der Ringmagnet ist dabei, wie aus Fig. 2 ersichtlich, axial gepolt.

Da der durch die ferromagnetischen Bauteile konzentrierte Magnetfluß lediglich durch einen Luftspalt geringer Dimension unterbrochen wird, ist die Intensität des Magnetfeldes im Luftspalt entsprechend groß. Damit kann auch eine ausreichende Kraft auf die stromdurchflossene Tauchspule 5 ausgeübt werden.

Die Tauchspule 5 nach Fig. 1 ist durch zwei Membranen 7 und 8 so gehaltert, daß sie nur eine Axialbewegung ausführen kann. Die Membranen 7 und 8 besitzen Halterungen 9 und 10, die am Kern 3 beziehungsweise am Polring 4 befestigt sind. Am Kopfende der Tauchspule 5 ist ein Fadenführer 6 angeordnet, über den der laufende Faden 11 gezogen wird.

Die Stellung der Tauchspule 5 wird mittels eines analogen HALL-Chips 12 überwacht. Bereits minimale Positionsänderungen werden von diesem HALL-Chip 12 erfaßt und über eine Leitung 13 an einen Regler 14 weitergeleitet. Dieser Regler 14 ändert an seinem Ausgang die Stromstärke I, die verstärkt durch einen Verstärker 15 über eine Leitung 16 der Wicklung der Tauchspule 5 zugeführt wird. Dadurch wird augenblicklich der Spulenstrom und damit die der vom Faden 11 am Fadenführer 6 erzeugten axialen Kraft entgegenwirkende Axialkraft der Tauchspule geändert, das heißt, angepaßt. Durch den Einsatz dieses Positionierregelkreises werden die durch Fadenspannungsschwankungen hervorgerufenen minimalen Positionsänderungen sofort zu Null ausgeregelt.

Da dieser elektrodynamische Linearantrieb ein lineares Kraftstromverhalten aufweist, ist der Tauchspulenstrom direkt proportional der Fadenspannung. Der der Tauchspule über die Leitung 16 zugeführte Strom I wird gleichzeitig von einer Auswerteeinrichtung 17 erfaßt. Diese Auswerteeinrichtung 17 ermittelt die momentane Fadenspannung und führt sie einer Anzeigeeinrichtung 18 zu. Diese Anzeigeeinrichtung 18 ermöglicht die zusätzliche visuelle Kontrolle insbesondere langperiodischer Fadenspannungsschwankungen. Die Auswerteeinrichtung 17 ist so ausgebildet, daß sie den zeitlichen Fadenspannungsverlauf auswerten kann. Sie trennt die Fadenspannungsschwankungen in periodische und nichtperiodische Schwankungen. Dabei kann das Erfassen der periodischen Schwankungen durch bekannte Verfahren, wie die Fourieranalyse, Autokorrelation oder die Verwendung eines selektiven Filters erfolgen.

In der Auswerteeinrichtung 17 erfolgt ein Vergleich der periodischen und nichtperiodischen Fadenzugkraftschwankungen mit einer vorgegebenen Fadenzugkraftcharakteristik. Diese beinhaltet zum Beispiel an einer Spulmaschine periodische Fadenspannungsschwankungen, die durch die Fadenverlegung beim Herstellen einer Kreuzspule entstehen. Des weiteren nimmt beim Abspulen eines Kopses, insbesondere im letzten Kopsdrittel, die Fadenspannung progressiv zu.

Bleibt beispielsweise die periodische, durch die Fadenverlegung hervorgerufene Fadenzugkraftschwankung aus, ist bei einer Spulmaschine, die die Fadenverlegung mit einer Kehrgewindewalze durchführt, auf einen sogenannten Trommelwickel zu schließen. In diesem Fall wird gleichzeitig über eine Signaleinrichtung 19 ein Störsignal ausgegeben und der Spulprozeß gestoppt. Letzteres kann durch eine üblicherweise an modernen Spulmaschinen vorhandene Klemm- und Schneideinrichtung bewirkt werden, die den Faden trennt und eine sogenannte Fadenbruchschaltung auslöst. Mit der Ausgabe des Störsignals wird auch die automatische Fadenbruchbehebung blockiert und eine Bedienungsperson auf die Notwendigkeit eines Eingriffes von Hand aufmerksam gemacht.

Bei Ansteigen der Fadenzugkraft, die bei einem Vergleich mit dem üblichen Fadenzugkraftverlauf beim Abspulen eines Kopses durch die Auswerteeinheit 17 als der Anstieg selektiert wird, der für das letzte Kopsdrittel typisch ist, kann die Auswerteeinheit 17 den Antrieb beeinflussen, um das Absenken der Fadengeschwindigkeit auf ein vorgegebenes Maß zu bewirken.

Bei der in Fig. 2 dargestellten Variante des Fadenzugkraftsensors ist die Tauchspule 5' mit dem Fadenführer 6' nicht über Membranen, sondern über einen Gleitstab 20 gehaltert. Dieser Gleitstab 20, der am Kopfende der Tauchspule 5' am rückseitigen Ende des Fadenführers 6' befestigt ist, ist in eine Längsbohrung eingesetzt, die mittig durch den Kern 3' und die Polscheibe 2' verläuft. Dabei ist zu sichern, daß die Gleitreibung so gering ist, daß sie das Ergebnis der Fadenspannungsmessung nicht verfälscht.

An dem dem Fadenführer 6' gegenüberliegenden Ende des Gleitstabes 20 ist ein HALL-Sensor 21 angeordnet, der die gleiche Funktion besitzt, wie der im Zusammenhang mit Fig. 1 erläuterte HALL-Sensor 12. Der Positionierregelkreis besitzt im Grunde den gleichen Aufbau wie bereits beschrieben. Lediglich ist die Leitung 16 hier durch einen festen Leistungsteil 16' und einen flexiblen Leitungsteil 16'' dargestellt, wobei diese beiden Leitungsteile über eine Steckverbindung 22 miteinander verbunden sind.

Weiterhin ist in dieser Figur die Nullstellung Xₒ der Tauchspule 5' dargestellt, in die mögliche Positionsänderungen entlang der X-Achse, hervorgerufen durch Fadenspannungsschwankungen, ausgeregelt werden.

Des weiteren ist hier die Auswerteeinheit 17 mit einem Wandler 23 verbunden, der eine Druckkraft 24 auf die Bremsscheibe 25 eines sogenannten Fadenspanners ausübt. Eine zweite Bremsscheibe 26 ist als Gegendruckelement fest gehaltert. Durch diese Schaltung können von der Auswerteeinheit 17 als nichtperiodische Fadenzugkraftschwankungen erkannte Fadenzugkraftschwankungen ausgeglichen werden, indem ein Absinken der Fadenzugkraft unmittelbar das Erhöhen der Druckkraft 24 auslöst. Gegebenenfalls kann auch während des Abspulens eines Kopses an der Spulmaschine zunächst die ansteigende Fadenspannung durch Absenken der Druckkraft 24 ausgeglichen werden, während zum Kopsende hin zusätzlich die Spulgeschwindigkeit abgesenkt wird.

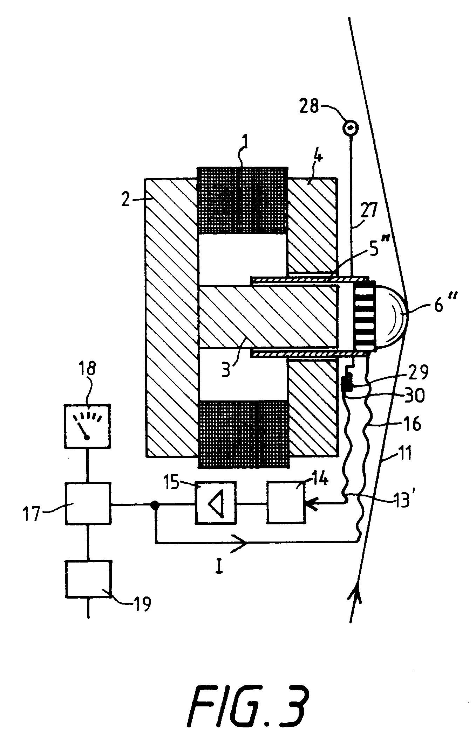

In Fig. 3 ist eine weitere Variante des Fadenzugkraftsensors dargestellt, wobei im Unterschied zu den bisher beschriebenen Ausbildungen die Tauchspule 5'' mit Fadenführer 6'' an einem Hebel 27 angebracht ist. Das Drehlager 28 des Hebels 27 kann zum Beispiel ein bekanntes Luftlager sein, welches einen vernachlässigbar kleinen Drehwiderstand besitzt. Da die Abweichungen der Tauchspule von der Nullstellung, wie bereits beschrieben, extrem gering sind, wirkt sich auch die in Fig. 3 dargestellte Lagerung nicht nachteilig hinsichtlich der Veränderung des Luftspaltes in Abhängigkeit von der den Radius bildenden Hebellänge aus. Dabei kann die Länge des Hebels 27 auch so gewählt werden, daß der Krümmungsradius groß genug ist.

Der Hebel 27 ist über die Tauchspule hinaus verlängert. Am Ende dieser Verlängerung weist er ein Plättchen 29 auf, welches einen Fotosensor 30 in der Nullstellung der Tauchspule 5'' abdeckt. Eine Lichtquelle, die mit dem Fotosensor 30 eine Lichtschranke bildet, ist hier aus Gründen der Übersichtlichkeit nicht dargestellt.

Verläßt das Plättchen 29 sein in Nullstellung der Tauchspule 5'' sich ergebende Position, deckt es den Fotosensor 30 nicht mehr vollständig ab, was über die Leitung 13' auf den Regler 14 übertragen wird. Dabei ist der Fotosensor so gestaltet, daß er unterschiedliche Signale abgibt, je nachdem, von welcher Seite die Lichtschranke geöffnet wird.

In allen drei Figuren ist zu erkennen, daß die durch den Polring 4 gebildeten Polschuhe, zwischen denen der Luftspalt ausgebildet ist und in dem die Tauchspule 5, 5' beziehungsweise 5'' angeordnet ist, sich nur über einen Teil der Tauchspule erstrecken. Dadurch ändert sich selbst bei Positionsänderung nicht das lineare Kraftstromverhalten des Systemes. Die während des Fadenlaufes nahezu bewegungslose Position der den Fadenführer tragenden Tauchspule ermöglicht eine nahezu trägheitslose Überprüfung der Fadenzugkraft. Dadurch ist bei hohen Fadengeschwindigkeiten auch eine Messung relativ hochfrequenter, zum Beispiel bis zu 50 Hz, Fadenzugkraftschwankungen möglich. So können nicht nur längere periodische oder nichtperiodische Fadenzugkraftschwankungen, sondern zum Beispiel auch durch die Fadenverlegung bewirkte relativ hochfrequente Fadenzugkraftschwankungen erfaßt werden. Damit ist der Einsatzbereich des erfindungsgemäßen Fadenzugkraftsensors wesentlich erweitert. Durch die einfache Konstruktion ist auch eine geringe Störanfälligkeit zu verzeichnen.

Die Tauchspule ist in beiden Richtungen belastbar. Aus diesem Grunde ist auch keine Rückholfeder erforderlich.

Durch die quasi Bewegungslosigkeit des Fadenführers des Fadenzugkraftsensors ist unmittelbar ein Einbau in einen elektronischen Fadenreiniger, der Dickeschwankungen des durchlaufenden Fadens erkennt, möglich. Derartige Fadenreiniger erfordern für eine genaue Messung einen ruhigen Fadenlauf, der durch den Fadenzugkraftsensor nicht beeinträchtigt wird.

## Patentansprüche

1. Fadenzugkraftsensor für eine Textilmaschine, insbesondere zur Fadenzugkraftmessung für schnellaufende Fäden,
dadurch gekennzeichnet,
daß ein Fadenführungselement (6; 6'; 6'') an einem Kopfende einer in einem Magnetfeld angeordneten Tauchspule (5; 5'; 5'') angebracht ist, daß im Bereich der Tauchspule ein Positionssensor (12; 21; 30) angeordnet ist, der in Betrieb bereits minimale Positionsänderungen der Tauchspule erfaßt und einem Regler (14) meldet, daß der Regler eine Verbindung zur Wicklung der Tauchspule aufweist, durch die er in Abhängigkeit von den Signalen des Positionssensors den Spulenstrom zur Erzielung einer Axialkraft reguliert, die die durch Fadenspannungsunterschiede hervorgerufene, über das Fadenführungselement axial auf die Tauchspule übertragene Kraft ausgleicht, und daß eine Einrichtung vorhanden ist, die diesen der Spule zugeführten Strom I ermittelt und als Maß für die Fadenzugkraft erfaßt.

2. Fadenzugkraftsensor nach Anspruch 1, dadurch gekennzeichnet, daß die Einrichtung zum Ermitteln des Stromes I mit einer Auswerteinrichtung (17) verbunden ist, durch die der zeitliche Fadenspannungsverlauf auswertbar ist.

3. Fadenzugkraftsensor nach Anspruch 2, dadurch gekennzeichnet, daß die Auswerteinrichtung (17) so ausgebildet ist, daß sie periodische und nichtperiodische Schwankungen erfaßt und mit einer vorgebbaren Fadenzugkraftcharakteristik vergleicht.

4. Fadenzugkraftsensor nach Anspruch 3, dadurch gekennzeichnet, daß die Auswerteinrichtung (17) mit Baueinheiten der Textilmaschine für den Fadentransport gekoppelt ist, die sie bei Abweichungen von der vorgegebenen Fadenzugkraftcharakteristik beeinflußt.

5. Fadenzugkraftsensor nach Anspruch 4, dadurch gekennzeichnet, daß die Auswerteinrichtung (17) mit Fadenbremsmitteln (23-26) gekoppelt ist, um nichtperiodische Fadenzugkraftschwankungen auszugleichen.

6. Fadenzugkraftsensor nach Anspruch 3 oder 4, dadurch gekennzeichnet, daß die Auswerteinrichtung (17) mit einer Signaleinrichtung (19) gekoppelt ist, die bei nicht der vorgegebenen Fadenzugkraftcharakteristik entsprechenden periodischen Fadenzugkraftschwankungen ein Störsignal ausgibt.

7. Fadenzugkraftsensor nach Anspruch 3 oder 4, dadurch gekennzeichnet, daß eine Schaltung vorhanden ist, die bei Ausbleiben von beim normalen Fadenlauf auftretenden periodischen Schwankungen die Baueinheiten für den Fadentransport stillsetzt und ein Störsignal in der Signaleinrichtung (19) erzeugt.

8. Fadenzugkraftsensor nach Anspruch 4, dadurch gekennzeichnet, daß die Auswerteeinrichtung (17) eine Schaltung besitzt, die bei Zunehmen der Fadenzugkraft über ein vorgebbares Maß den Antrieb für den Fadentransport zur Absenkung der Fadengeschwindigkeit beeinflußt.

9. Fadenzugkraftsensor nach einem der Ansprüche 1 bis 8, dadurch gekennzeichnet, daß Polschuhe, zwischen denen der Luftspalt ausgebildet ist, in dem die Tauchspule (5; 5'; 5'') längsverschiebbar angeordnet ist, sich nur über einen Teil der Tauchspule erstrecken.

10. Fadenzugkraftsensor nach einem der Ansprüche 1 bis 9, dadurch gekennzeichnet, daß die Tauchspule (5) an Membranen (7, 8) aufgehängt ist.

11. Fadenzugkraftsensor nach einem der Ansprüche 1 bis 9, dadurch gekennzeichnet, daß die Tauchspule (5') an mindestens einem sich in ihrer Längsrichtung erstreckenden Träger (20) befestigt ist, der längsverschiebbar gelagert ist.

12. Fadenzugkraftsensor nach einem der Ansprüche 1 bis 9 dadurch gekennzeichnet, daß die Tauchspule (5'') an einem Hebel (27) befestigt ist, der drehbar auf einer Achse (28) gelagert ist, die senkrecht zur Spulenachse der Tauchspule angeordnet ist.

13. Fadenzugkraftsensor nach einem der Ansprüche 1 bis 12, dadurch gekennzeichnet, daß der Positionssensor aus einem analogen HALL-Chip (12; 21) besteht.

14. Fadenzugkraftsensor nach einem der Ansprüche 1 bis 12 dadurch gekennzeichnet, daß der Positionssensor (30) durch eine aus Lichtquelle und Fotosensor bestehende Lichtschranke gebildet ist.

## Claims

1. Thread tensile force sensor for a textile machine, especially for measuring the thread tensile force for fast-running threads,
characterized in that
a thread guide element (6; 6'; 6'') is fitted at a head end of a plunger coil (5; 5'; 5'') disposed in a magnetic field, that in the region of the plunger coil a position sensor (12; 21; 30) is disposed, which in operation picks up even minimal positional changes of the plunger coil and signals them to a controller (14), that the controller possesses a connection to the winding of the plunger coil, through which it regulates, as a function of the signals from the position sensor, the coil current for creating an axial force which compensates the force created by differences in thread tension and transmitted axially by the thread guide element to the plunger coil, and that a device is present which ascertains this current I supplied to the coil and detects it as a measure for the thread tensile force.

2. Thread tensile force sensor according to Claim 1, characterized in that the device for ascertaining the current I is connected to an evaluator device (17), by which the thread tensile curve with time can be evaluated.

3. Thread tensile force sensor according to Claim 2, characterized in that the evaluator device (17) is so constructed that it picks up periodic and non-periodic fluctuations and compares them with a predeterminable thread tensile force characteristic.

4. Thread tensile force sensor according to Claim 3, characterized in that the evaluator device (17) is coupled to components of the textile machine for transporting the thread, which influences them when deviations from the predetermined thread tensile force characteristic occur.

5. Thread tensile force sensor according to Claim 4, characterized in that the evaluator device (17) is coupled to thread braking means (23-26), in order to compensate non-periodic fluctuations in the thread tensile force.

6. Thread tensile force sensor according to Claim 3 or 4, characterized in that the evaluator device (17) is coupled to a signal device (19), which, when periodic thread tensile force fluctuations that do not correspond to the predetermined thread tensile force characteristic occur, emits a fault signal.

7. Thread tensile force sensor according to Claim 3 or 4, characterized in that a circuit is provided which, when periodic fluctuations that occur in normal thread running are absent, shuts down the components for thread transportation and generates a fault signal in the signal device (19).

8. Thread tensile force sensor according to Claim 4, characterized in that the evaluator device (17) possesses a circuit which, if the thread tensile force increases above a predeterminable value, influences the drive for transporting the thread to lower the thread speed.

9. Thread tensile force sensor according to one of Claims 1 to 8, characterized in that pole shoes between which the air gap in which the plunger coil (5; 5'; 5'') is mounted longitudinally displaceable is formed, extend only over a portion of the plunger coil.

10. Thread tensile force sensor according to one of Claims 1 to 9, characterized in that the plunger coil (5) is suspended from diaphragms (7, 8).

11. Thread tensile force sensor according to one of Claims 1 to 9, characterized in that the plunger coil (5') is fixed to at least one support (20), extending in its longitudinal direction, which support is mounted longitudinally displaceable.

12. Thread tensile force sensor according to one of Claims 1 to 9, characterized in that the plunger coil (5'') is fixed to a lever (27), which is journalled rotatably on an axis (28) which is disposed perpendicularly to the coil axis of the plunger coil.

13. Thread tensile force sensor according to one of Claims 1 to 12, characterized in that the position sensor consists of an analogue HALL-Chip (12; 21).

14. Thread tensile force sensor according to one of Claims 1 to 12, characterized in that the position sensor (30) is formed of a light barrier consisting of a light source and photosensor.

## Revendications

1. Capteur pour déterminer la force de traction d'un fil dans une machine textile, en particulier pour mesurer la force de traction de fils qui se déplacent rapidement, caractérisé par le fait qu'un élément de guidage du fil (6 ; 6' ; 6'') est monté sur une extrémité antérieure d'une bobine mobile (5 ; 5' ; 5'') qui est disposée dans un champ magnétique, par le fait qu'un capteur de position (12 ; 21 ; 30) est disposé dans la région de la bobine mobile, que, lors du fonctionnement, il détecte même des modifications minimales de la position de la bobine mobile et qu'il les signale à un régulateur (14), par le fait que le régulateur présente avec le bobinage de la bobine mobile une liaison au moyen de laquelle il régule le courant dans la bobine en fonction des signaux du capteur de position, en vue d'engendrer une force axiale destinée à compenser la force qui est transmise axialement à la bobine mobile par l'intermédiaire de l'élément de guidage du fil et qui est produite par des différences de tension du fil, et par le fait qu'il est prévu un dispositif qui détermine ce courant I amené à la bobine et qui le détecte pour servir de mesure de la force de traction du fil.

2. Capteur pour déterminer la force de traction d'un fil selon la revendication 1, caractérisé par le fait que le dispositif servant à déterminer le courant I est relié à un dispositif d'exploitation des données (17) au moyen duquel on peut analyser les variations de la tension du fil en fonction du temps.

3. Capteur pour déterminer la force de traction d'un fil selon la revendication 2, caractérisé par le fait que le dispositif d'exploitation des données (17) est constitué de manière à détecter des fluctuations périodiques et apériodiques et à les comparer à une courbe caractéristique de la force de traction du fil qui peut être prédéterminée.

4. Capteur pour déterminer la force de traction d'un fil selon la revendication 3, caractérisé par le fait que le dispositif d'exploitation des données (17) est accouplé à des unités structurelles de la machine textile qui sont destinées à déplacer le fil, et qu'il agit sur elles dans le cas d'écarts par rapport à la courbe caractéristique prédéterminée de la force de traction du fil.

5. Capteur pour déterminer la force de traction d'un fil selon la revendication 4, caractérisé par le fait que le dispositif d'exploitation des données (17) est accouplé à des moyens de freinage du fil (23 à 26) pour compenser des fluctuations apériodiques de la force de traction du fil.

6. Capteur pour déterminer la force de traction d'un fil selon la revendication 3 ou 4, caractérisé par le fait que le dispositif d'exploitation des données (17) est accouplé à un dispositif de signalisation (19) qui émet un signal de dérangement lorsque des fluctuations périodiques de la force de traction du fil ne correspondent pas à la courbe caractéristique prédéterminée de la force de traction du fil.

7. Capteur pour déterminer la force de traction d'un fil selon la revendication 3 ou 4, caractérisé par le fait qu'il est prévu un circuit qui arrête les unités structurelles destinées à déplacer le fil lorsque des fluctuations périodiques intervenant pendant le déplacement normal du fil sont absentes et qui engendre un signal de dérangement dans le dispositif de signalisation (19).

8. Capteur pour déterminer la force de traction d'un fil selon la revendication 4, caractérisé par le fait que le dispositif d'exploitation des données (17) comporte un circuit pour agir sur l'entraînement qui produit le déplacement du fil, en vue de diminuer la vitesse du fil lorsque la force de traction du fil augmente au-dessus d'une valeur qui peut être prédéterminée.

9. Capteur pour déterminer la force de traction d'un fil selon l'une des revendications 1 à 8, caractérisé par le fait que des pièces polaires, entre lesquelles est ménagé l'entrefer dans lequel la bobine mobile (5 ; 5' ; 5'') est disposée en pouvant coulisser dans le sens longitudinal, ne s'étendent que sur une partie de la bobine mobile.

10. Capteur pour déterminer la force de traction d'un fil selon l'une des revendications 1 à 9, caractérisé par le fait que la bobine mobile (5) est accrochée à des membranes (7, 8).

11. Capteur pour déterminer la force de traction d'un fil selon l'une des revendications 1 à 9, caractérisé par le fait que la bobine mobile (5') est fixée à au moins une tige (20) qui s'étend dans sa direction longitudinale et qui est montée en pouvant coulisser dans le sens longitudinal.

12. Capteur pour déterminer la force de traction d'un fil selon l'une des revendications 1 à 9, caractérisé par le fait que la bobine mobile (5'') est fixée à un levier (27) qui est monté tournant sur un axe (28), ce dernier étant disposé perpendiculairement à l'axe de la bobine mobile.

13. Capteur pour déterminer la force de traction d'un fil selon l'une des revendications 1 à 12, caractérisé par le fait que le capteur de position est constitué par une puce analogique à effet Hall (12 ; 21).

14. Capteur pour déterminer la force de traction d'un fil selon l'une des revendications 1 à 12, caractérisé par le fait que le capteur de position (30) est constitué par une cellule photoélectrique qui est composée d'une source lumineuse et d'un détecteur photoélectrique.
